# EUROPEAN PATENT SPECIFICATION

(11) **EP 3 950 232 B1**
(45) Date of publication and mention of the grant of the patent: **02.11.2022**
(21) Application number: 20189380.7
(22) Date of filing: 04.08.2020
(51) Int. Cl.: B25J 9/16, B25J 13/08, B25J 15/00, B25J 15/06, B65D 90/00, G01M 99/00

(54) **METHOD FOR TESTING A CONTAINER BEING CAPABLE TO STORE AT LEAST ONE VEHICLE COMPONENT**
VERFAHREN ZUR PRÜFUNG EINES BEHÄLTERS, DER MINDESTENS EINE FAHRZEUGKOMPONENTE AUFNEHMEN KANN
PROCÉDÉ POUR TESTER UN RÉCIPIENT CAPABLE DE STOCKER AU MOINS UN COMPOSANT DE VÉHICULE

(43) Date of publication of application: 09.02.2022
(73) Proprietor: Bayerische Motoren Werke Aktiengesellschaft, 80809 München (DE)
(72) Inventor: Park, Chulhun, Greer, 29651 (US)

(56) References cited:
- EP-A1- 1 449 626
- EP-A1- 3 683 721
- US-A1- 2016 016 311
- US-A1- 2020 017 316
- US-B1- 10 399 778

## Description

The invention relates to a method for testing a container being capable to store at least one vehicle component.

DE 20 2018 101 231 U1 shows a gripper for gripping a component for the preparation of a component treatment. The gripper comprises a position detection device for detecting a position of the component in a component storage device. In the component storage device the at least one component is stored in an at least partly undefined position. Furthermore the gripper comprises a receiving device for receiving the component. The position detection device arranged on the gripper is configured to detect the position of the gripper in at least two different directions in space relative to the component without contact by controlling a control device. By this the position detection device can amend the position of the gripper relative to the component in the at least two different directions in space relative to the component one after the other or at least partially. This allows for the receiving device to be positioned at a predetermined position relative to the component for receiving the component. Other examples of robotic grippers are described by the documents US2016/016311, US1039977, EP1449626, US2020/017316 or EP3683721.

It is an object of the present invention to provide a method for testing a container being capable to store at least one vehicle component by means of which faulty containers can be sorted out simple and reliable.

This object is solved by a method for testing a container being capable to store at least one vehicle component having the features of patent claim 1. Advantageous embodiments with expedient and non-trivial developments of the invention are indicated in the other patent claims.

The invention relates to a method for testing a container being capable to store at least one vehicle component preferably in a consistent manner. The container may also be referred to as a rack. The container is capable of transporting the at least one vehicle component within a production site or between several production sites. In the method a robot is placed at a predefined initial position relative to the container. Further the robot is moved relative to the container with an initial velocity along an initial path. In addition a relative position between a vehicle component stored in the container and the robot is measured by at least one search sensor. A measurement direction of the search sensor can be depth and/or side to side and/or up - down. Preferably the relative position is described by three measurement directions in a body coordinate frame. The body coordinate frame is defined as below: +x is from front to rear of a vehicle for which the vehicle component is intended, +y is from left to right, +z is opposite to gravity.

The measured relative position is compared with a predefined position value. The predefined position value may be stored in a memory device and provided for a computing device, preferably of the search sensor, by the memory device. By means of the computing device a difference between the measured relative position and the predefined position value is compared to at least one predefined tolerance range, which may be stored in the memory device. If the relative position measured lies within the tolerance range, a gripping tool of the robot is moved towards the vehicle component and is controlled to grip the vehicle component. The gripped vehicle component can be removed from the container by the robot. The measured relative position lying in the tolerance range characterizes that the relative position measured approximates the predefined position value. If the relative position measured lies outside of the tolerance range, the robot is moved relative to the container depending on the relative position measured respectively a difference between the relative position measured and the predefined position value. After the robot has been moved relative to the container depending on the relative position measured respectively the difference between the relative position measured and the predefined position value, component new relative position between the vehicle component stored in the container and the robot is measured by the at least one search sensor and compared to the predefined position value. The measured relative position lying outside of the tolerance range characterizes that the difference between the relative position measured and the predefined position value is so large that an adjustment of the position of the robot relative to the container is necessary to enable the gripping tool of the robot to grip the vehicle component stored in the container. In this case it can be analysed If the difference between the relative position measured and the predefined position value is so large that an adjustment of the position of the robot relative to the container is sufficient to enable the gripping tool of the robot to grip the vehicle component stored in the container or if the container is to be labelled as faulty and therefore to be sorted out. If the gripping tool controlled to grip the vehicle component fails to grip the vehicle component, the container is sorted out. A failure of the gripping tool to grip the vehicle component might indicate that the vehicle component to be gripped is arranged in a way in the container which deviates from an expected arrangement of the vehicle component in the container. The deviation of the arrangement of the vehicle component in the container compared to the expected arrangement of the vehicle component in the container indicates a faulty support of the vehicle component in the container. The faulty support can result from a faulty support device of the container. The method offers an easy and reliable testing of the container during a use of the container, in particular a removal of at least one vehicle component from the container, preferably in a production side. The method allows for the container to being tested during an unloading of every vehicle component from the container.

Preferably, by use of a part presence sensor a presence of a rearmost vehicle component in a first row of the container allocated to a first initial path is analysed, and wherein if the presence of the rearmost vehicle component in the first row is detected, the robot is moved along a first initial path relative to the container, elsewise the robot is moved along a second initial path relative to the container. In other words, if it is detected by use of the part presence sensor, that there is no vehicle component present in the first row of the container, the robot is moved to and along the second initial path. The first initial path might extend along the first row and the second initial path might extend along the second row. For each row a separate part presence sensor can be provided. The at least one part presence sensor can be placed on the container, preferably closest to a respective position of a potential rearmost vehicle component of each row compared to other vehicle components of each respective row. If by use of the method for all rows of the container no vehicle component is detected, the container is determined as empty. Subsequently it can be checked if the container really is empty. If there is at least one vehicle component still stored in the container despite the container being determined as empty, the container is determined as faulty.

Preferably, the success of the gripping of the vehicle component by the gripping tool is determined by use of at least one gripping control sensor. In this configuration the at least one gripping control sensor is preferably arranged on the gripping tool. In this way it can be easily and instantly determined if the gripping tool was successfully gripping the vehicle component stored in the container. The gripping control sensor for example is in the form of a proximity sensor or a weight sensor or a counterforce sensor. In this way it can be determined easily and reliably if the gripping tool successfully gripped the vehicle component stored in the container.

Preferably, by use of at least one identification sensor the container is uniquely identified and an information characterizing the sorting out of the identified container is stored in a memory device together with the identification of the container. In other words, each container being tested by use of the described method is being uniquely identified by the at least one identification sensor. The at least one identification sensor is preferably mounted on the robot. If the container is sorted out, the information representing the sorting out of the container is allocated to the identification of the sorted out uniquely identified container, in particular by means of an allocation rule being stored in the computing device. The identification of the uniquely identified container is stored in the memory device together with the allocated information which characterizes the sorting out of this particular container. This way, in the memory device a database can be build up, which contains sorted out containers. This enables a particularly simple retrieval of sorted out containers by use of the respective identification.

In an advantageous embodiment of the invention the container is uniquely identified by capturing an identification number placed on the container. In other words, the identification number placed on the container is recorded by the at least one identification sensor. The identification number represents the unique identification of the tested container. The identification number being placed on the container offers a simple possibility to display the unique identification of the container and enables a reliable and easy determination of the unique identification of the respected tested container.

It has proven to be particularly advantageous if the information characterizing the sorting out of the identified container comprises the cause of the sorting out. The cause of the sorting out can for example be characterize by the fact that the gripping tool controlled to grip the vehicle component fails to grip the vehicle component. In this way by allocating this information on the cause of the sorting out to the determined identification of the container, it is possible to store the cause of the sorting out allocated to the identification of the container in the memory device. In this way it is particularly easy to repair the respective sorted out container since the cause of the sorting out can be provided by the memory device. This provided cause helps finding the fault of the sorted out container. In this way time consuming trouble shooting can be avoided.

Preferably, the robot is slowed down from the initial velocity to a further velocity as soon as the relative position measured lies within the tolerance range. When the robot is reaching a stop position relative to the vehicle component the robot stops. Afterwards, the gripping tool of the robot is moved towards the vehicle component and is controlled to grip the vehicle component. This allows for the robot to be moved relatively fast near the vehicle component to be gripped along the initial path until reaching the stop position. By slowing down the robot in its velocity as soon as the relative position measured lies within the tolerance range, the vehicle component can be gripped by the robot with especially high precision. The stop position can be defined by a further tolerance range. As soon as a difference between the distance measured and the stop position lies within a further tolerance range, the robot is stopped in its movement relative to the vehicle component to be gripped. In this stop position the robot moves the gripping tool relative to the vehicle component to grip the vehicle component.

Preferably, the robot moves the gripping tool to a predefined pick position, in which the gripping tool is controlled to grip the vehicle component. In the predefined pick position the gripping tool can grip the vehicle component by being moved from an initial state to a gripping state. In other words, the robot is moved to the stop position in which the robot is stopped relative to the vehicle component to be gripped first with the initial velocity for a first distance and afterwards with the further velocity for a second distance until reaching the stop position. In this stop position the robot moves the gripping tool to the predefined pick position relative to the vehicle component and the vehicle component is gripped by use of the gripping tool. This allows for the gripping tool to grip the vehicle component with particularly high precision.

In a data storage unit of the robot, preferably the memory device, an expected relative position of the predefined initial position to the predefined pick position for each vehicle component can be stored. This means that the robot is placed at the predefined initial position and subsequently the gripping tool is moved to the predefined pick position, which is defined on base of the stored relative position of the predefined initial position to the predefined pick position. In this way the gripping tool can be moved really quickly to the predefined pick position by means of the robot. It can be therefore omitted to move the gripping tool from the predefined initial position to the predefined pick position by use of sensor data. This enables a particularly fast execution of the movement of the gripping tool by means of the robot to the predefined pick position.

Preferably, a sorting out of the container does not take place when every vehicle component being stored in the container is removed from the container by use of the gripping tool. In this case the container is being considered faultless and therefore free of errors, which results in the container not being sorted out. This embodiment allows for a reliable differentiation regarding whether the container is faulty or faultless.

In a further preferred embodiment of the invention for the search sensor a laser sensor or an ultrasonic sensor is used and/or for the identification sensor a camera is used. The search sensor being constructed as a laser sensor or an ultrasonic sensor enables for a contactless detection of the relative position between the robot and the vehicle component being stored in the container, which is to be gripped and removed from the container. A laser sensor as well as an ultrasonic sensor is a very precise and reliable one-dimensional sensor which enables an easy measurement of the relative position between the vehicle component and the robot. The camera in combination with an image processing device allows for an easy determination of the identification number placed on the container as the unique identification of the container. The identification number placed on the container can be recorded by the camera, wherein the image processing device might determine the unique identification based on the image captured by the camera.

The invention is now explained in more detail using a preferred embodiment and with reference to the drawings. It is shown in:
- Fig. 1: a perspective view of a container with multiple vehicle components stored in the container, as well as a robot with several sensors and a gripping tool, which is capable of gripping the vehicle components being stored in the container to remove the respective vehicle components from the container; and
- Fig. 2: a schematic procedural diagram for a method for testing the container shown in Fig. 1 by use of the robot wherein the container is being sorted out depending on removal processes in which the respective vehicle components are removed from the container by use of the robot.

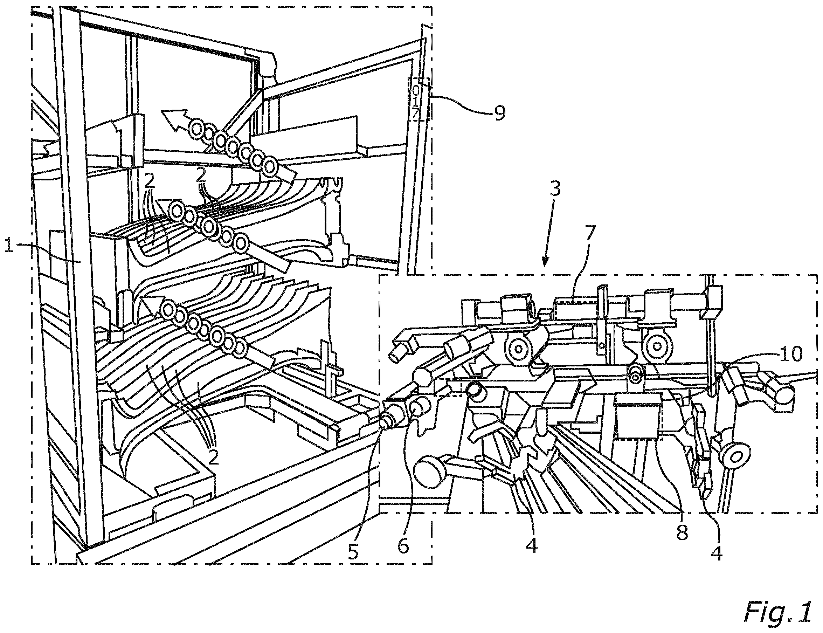

In Fig. 1 a container 1 is shown, in which several vehicle components 2 are stored. By use of the container 1, which can also be referred to as a rack, the vehicle components 2 can be transported within a production site and/or between production sites. Due to intensive use of the container 1 a failure of the container 1 may occur. Hence, the container 1 is to be tested if it is free of errors.

In Fig. 1 additional to the container 1 and the vehicle components 2 a robot 3 is shown, which comprises a gripping tool 4. This gripping tool 4 can comprise at least one clamp. The gripping tool 4 is adapted to grip the vehicle components 2 stored in the container 1 and to remove the respective vehicle components 2 from the container 1. The robot 3 is adapted to adapt or at least assist a method for testing the container 1.

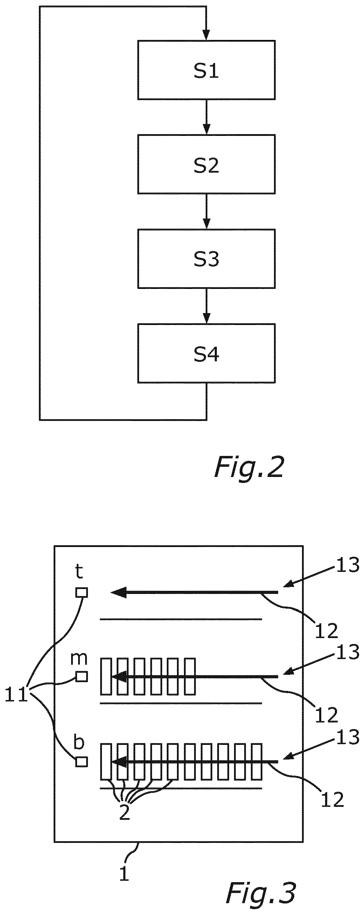

A procedural diagram for the method for testing the container 1 is shown in Fig. 2. For carrying out or at least assisting the method the robot 3 comprises at least one search sensor 5, at least one gripping control sensor 6, and at least one identification sensor 7. The at least one gripping control sensor 6 and the at least one identification sensor 7 are each illustrated in Fig. 1 with a schematic box. The at least one search sensor 5 is in this embodiment of the invention a laser sensor or an ultrasonic sensor. The at least one gripping control sensor 6 is in this embodiment mounted on the gripping tool 4 and adapted to analyse if the gripping tool 4 holds one of the vehicle components 2. This gripping control sensor 6 is in this embodiment a proximity sensor. The identification sensor 7 is in this embodiment a camera adapted to record the container 1 at least partially. The identification sensor 7 can be mounted on the robot 3 or on a floor. The identification sensor 7 is capable of reading a rack information, preferably an identification number 9 written on the container 1. This identification number 9 is identical for each vehicle component 2 stored in the container 1 and therefore the identification number 9 is only to be detected once per each container 1. The camera used as the at least one identification sensor 7 can be a code reader camera.

The robot 3 furthermore comprises a computing device 8, whose functions are described later on. The computing device 8, which might be part of one of the sensors of the robot 3, preferably the search sensor 5, is also represented by a schematic box. Alternatively the computing device 8 can be provided as a part of the robot 3 which is separate to the sensors. Further alternatively the computing device 8 can be separate to the robot 3. The Computing device 8 is connected to a programmable logic controller, the robot 3, and a plant level quality system. Computing device 8 might receive the identification number 9 from the programmable logic controller, receive positional information as well as OK/Not-OK signal from the robot 3, and send analysis results to the plant level quality system.

The computing device 8 can be mounted on the gripping tool 4 of the robot 3 or on the floor.

The identification sensor 7 can be triggered to determine the identification number 9 can be triggered by the robot 3 or by a programmable logic controller. The robot 3 or the programmable logic controller can store the determined identification number 9 and/or send the determined identification number 9 to the computing device 8.

In Fig. 2 the process flow chart for the method for testing the container 1 is shown, which comprises a first step S1, a following second step S2, a following third step S3 and a following fourth step S4. In the first step S1 the container 1, which is to be tested, is chosen and an identification number 9 placed on the container 1, which describes a unique identification for the respective container 1, is captured by use of the at least one identification sensor 7. In the method by use of the at least one identification sensor 7 the container 1 is uniquely identified based on the recorded identification number 9. The determined identification of the container 1, preferably the identification number 9, is provided for a robot controller and memory device 10, in which the identification number 9 can be stored. In this embodiment the robot controller and memory device 10 is part of the robot 3.

In the second step 2 the robot 3 moves to a predefined initial position relative to the container 1, wherein the robot 3 can send a positional information characterizing the reached initial position to the computing device 8. The robot 3 can be moved to the predefined initial position by use of a one-dimensional search sensor, preferably the at least one search sensor 5. Afterwards the robot 3 is moved relative to the container 1 with an initial velocity along an initial path 12, while a relative position between one of the vehicle components 2 stored in the container 1 and the robot 3 is measured by the at least one search sensor 5 several times at regular intervals and therefore continuously and the at least one measured relative position is provided for the computing device 8. By use of the computing device 8 the measured relative position is compared with a predefined position value. The predefined position value may be stored in the robot controller and memory device 10. The robot controller and memory device 10 can provide the position distance value for the computing device 8. If a difference of the relative position measured to the predefined position value lies within a predefined tolerance range, which may be stored in the robot controller and memory device 10, the gripping tool 4 is moved towards the vehicle component 2 which is to be gripped.

If the difference of the distance measured to the predefined position value lies outside of the tolerance range, the robot 3 is moved relative to the container 1 depending on the difference of the relative position measured to the predefined position value computed by use of the computing device 8.

Afterwards the relative position is measured again and depending on the comparison between the relative position measured and the predefined position value the gripping tool 4 is moved towards the vehicle component 2 to be gripped or the robot 3 is moved relative to the container 1 depending on an outcome of the comparison. As soon as it is detected, that the relative position measured lies within the predefined tolerance range, the robot 3 is slowed down from the initial velocity to a further velocity until the robot reaches a predefined stop position. When the robot 3 reaches the stop position, the movement of the robot 3 is stopped. In this stop position of the robot 3 the robot 3 moves the gripping tool 4 towards the vehicle component 2, which gripping tool 4 is controlled to grip the vehicle component 2. The comparison between the relative position measured and the predefined position value can take place within the search sensor 5. The predefined position value can be stored in a memory of the search sensor 5 or can be provided for the search sensor 5 by the robot controller and memory device 10.

In Fig. 3 the container 1 is shown in a schematic view. The container 1 comprises several rows 13 in which respective vehicle components 2 can be stored. In this embodiment the container 1 comprises a top row t, a middle row m and a bottom row b. At the end of each row 13 a part presence sensor 11 is installed on the container 1. By use of each part presence sensor 11 a presence of a rearmost vehicle component 2 in each row 13 of the container 1 allocated to a respective initial path 12 is analysed. If the respective part presence sensor 11 detects a presence of the rearmost vehicle component 2 in the assigned row, the robot 3 is moved along an assigned initial path 12 relative to the container 1, elsewise the robot 3 is moved to another row 13 and along an initial path 12 relative to the container 1 assigned to the other row 13. The robot 3 can be first moved to the top row t. If the part presence sensor 11 allocated to the top row t detects a presence of the rearmost vehicle component 2 in the top row t, the robot 3 is moved along the initial path 12 relative to the container 1 assigned to the top row t. If the part presence sensor 11 allocated to the top row t does not detect a presence of the rearmost vehicle component, the robot 3 is moved to a further row 13 in which the assigned part presence sensor 11 detects the presence of a rearmost vehicle component 2 allocated to the respective row 13. If the part presence sensor 11 of the top row t does not detect the presence of the rearmost vehicle component 2 assigned to the top row t and the part presence sensor 11 of the middle row m does detect the presence of a rearmost vehicle component 2 in the middle row m, the robot 3 is moved to the middle row m and along the initial path 12 relative to the container 1 assigned to the middle row m. The robot 3 would travel first the top row t, then the middle row m, and last the bottom row b, assuming each row 13 contains at least one vehicle component 2. The respective initial path 12 for each row 13 can be predefined based on a master container.

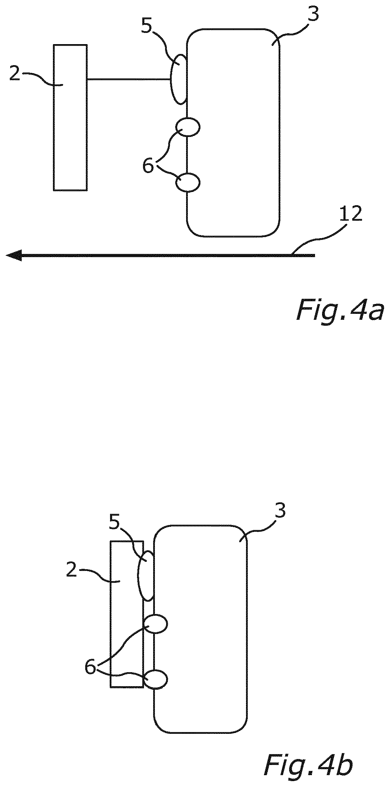

In the third step S3 the robot 3 moves the gripping tool 4 to a predefined pick position relative to the predefined initial position, in which predefined pick position the gripping tool 4 is controlled to grip the vehicle component. This movement is shown in Fig. 4a and 4b. In Fig. 4a the robot 3 and the vehicle component 2 to be gripped are shown with a relative position to each other which lies within the tolerance range. Thus the robot 3 is slowed down in its movement along the initial path 12 from the initial velocity to the further velocity. The robot 3 is stopped when it reaches the stop position. In this stop position the robot 3 controls the gripping tool 4 to grip the vehicle component 2 to be gripped. This allows for an especially high precision when contacting the gripping tool 4 with the vehicle component 2 to be gripped. In Fig. 4b the robot 3 and the vehicle component 2 are shown in a relative position in which the gripping tool 4 of the robot 3 is in contact with the vehicle component 2 to be gripped and therefore in the predefined pick position. In this predefined pick position the gripping tool 4 of the robot 3 is able to grip the vehicle component 2. The robot 3 is stopped at the predefined pick position.

A robot position information, characterising the robot position of the robot 3, in which a difference between the measured relative position and the predefined position value lies within the tolerance range or in which the robot 3 has reached the pick position can be provided for the computing device 8. Preferably, the robot controller and memory device 10 provides the robot position information for the computing device 8. This robot position can be defined relative to a body coordinate frame of a vehicle to be built by use of the vehicle components 2 stored in the container 1. Thus, the robot position is defined relative to the vehicle components 2 in the container 1 and therefore depends on how the vehicle components 2 are sitting within the container 1. Based on the respective robot position it is possible to pinpoint which slot of the container 1 has a problem. In the robot controller and memory device 10 each robot position information can be allocated to a time stamp and a gripping information. The robot positions characterised by respective robot position information can be transferred to the computing device 8 and saved in the form of a database.

A second positional information, which characterizes the arrangement of the gripping tool 4 at the predefined pick position, can be provided for the computing device 8. By use of the at least one gripping control sensor 6 it is determined if the vehicle component 2 has been gripped by the gripping tool 4 and therefore the gripping tool 4 is holding the vehicle component 2. The gripping control sensor 6 can provide the gripping information to the robot controller and memory device 10, which gripping information characterises if the vehicle component 2 has been successfully gripped or not. This gripping information can be provided for the computing device 8, preferably together with the robot position information. By use of the gripping tool 4 the vehicle component 2 to be gripped is clamped or sucked on. A successful gripping of the vehicle component 2 by the gripping tool 4 is tested by the at least one gripping control sensor 6 which is adapted to confirm a presence of the vehicle component 2 on the gripping tool 4. A control of the gripping tool 4 to grip the vehicle component 2 does preferably not take place if the distance measured lies within the third tolerance range.

In the fourth step S4 it is analysed if the container 1 is faulty, preferably by use of the computing device 8. In other words, in the fourth step S4 it is detected if the tested container 1 is an outlier. If it is detected that the container 1 is an outlier, it can be reported to a planned level quality system that the tested container 1, which can be uniquely identified by the identification number, is an outlier. In the fourth step S4 it is detected if the container 1 being tested is faulty, wherein the container 1 is considered faulty if the gripping tool 4 controlled to grip of the vehicle component 2 fails to grip the vehicle component 2, which can be determined by use of the at least one gripping control sensor 6. If the container 1 being tested is considered to being faulty, it is sorted out.

The robot controller and memory device 10 can send the gripping information together with the respective robot position information to the computing device 8. Subsequently, the computing device 8 can carry out a robot position value analysis. Based on the robot position value analysis it is possible to identify which container 1 and especially which row 13 of this container 1 caused the sorting out.

The method can be repeated with a further container 1 to be tested. An information characterizing the sorting out of the tested container 1 can be allocated to the identification of the container 1, wherein the information characterizing the sorting out can be stored in the robot controller and memory device 10 allocated to the identification of the tested container 1. Preferably, the information characterizing the sorting out of the identified container 1 comprises the cause of the sorting out of the respective container 1.

The cause of the sorting out of the container 1 can characterize a procedural step which led to characterizing the container 1 as faulty. The steps of the method for testing the container 1 can be repeated for each vehicle component 2 being stored in the container 1 being tested. The information characterizing the cause of the sorting out can represent the vehicle component 2, which caused the container 1 to being considered as faulty. Preferably the information further characterizes an actual position of this vehicle component 2 or a target position of this vehicle component 2.

If the robot 3 is able to remove every vehicle component 2 stored in the tested container 1 without the container 1 being stated as faulty, a sorting out of the container 1 does not take place. The tested container 1 which is stated as not being faulty can be reintroduced into a production process, preferably in the production site.

The computing device 8 is adapted to receive the captured identification number 9 placed on the container 1 and is adapted to store the received identification number 9 in the robot controller and memory device 10. Furthermore, the computing device 8 is adapted to receive a respective position of the robot 3, preferably a relative position of the robot 3 to the tested container 1. Preferably the computing device 8 is adapted to receive a robot position information, which characterizes an actual robot position of the robot 3. The robot position information can furthermore characterize the actual robot position together with a pass/fail information, which characterizes if the difference between the distance measured and the predefined position value lies within the tolerance range and/or the gripping tool 4 controlled to grip the vehicle component 2 fails or succeeds to grip the vehicle component 2. The computing device 8 is furthermore adapted to group robot stop positions, analyse and/or detect outliers and therefore faulty containers 1. Additionally, the computing device 8 is adapted to report a report to a planned level quality system, which characterizes if the tested container 1 is okay or not okay.

The predefined initial position and/or the predefined pick position as well as respective measured actual positions of the robot 3 can be defined relative to a world coordinate frame, wherein translation as well as rotation unit vectors can be defined. Translation information can be used for a statistical outlier analysis. Translation can be represented in positional values in millimetre unit. An example value for the Translation is [3000, 2000, 500]. Rotation unit vector information can be used for detecting manual intervention, wherein it can be identified that a reset of the used statistical data is required.

The invention described is based on the understanding that part containers 1 are utilized to store production parts, preferably vehicle components 2. These production parts are coming from suppliers all over the world and respective containers 1 should provide a prevention of damaging the respective production parts during transportation. Additionally, rack to rack variations of the respective containers 1 should be small enough for automation. In reality both problems can occur and might cause scrapping car from damaged production parts or production downtime from rack to rack variation of the respective container 1. The described method for testing a container 1 enables to provide a possibility to monitor rack to rack variations of containers 1 using robot coordinate information and a monitoring system, which comprises the computing device 8 as well as the robot controller and memory device 10.

### Reference Signs

- 1: container
- 2: vehicle component
- 3: robot
- 4: gripping tool
- 5: search sensor
- 6: gripping control sensor
- 7: identification sensor
- 8: computing device
- 9: identification number
- 10: robot controller and memory device
- 11: part presence sensor
- 12: initial path
- 13: row
- S1-S4: process steps

## Claims

1. A method for testing a container (1) being capable to store at least one vehicle component (2), in which
a) a robot (3) is placed at a predefined initial position relative to the container (1) and moved relative to the container (1) with an initial velocity along an initial path (12), and
b) a relative position between a vehicle component (2) stored in the container (1) and the robot (3) is measured by at least one search sensor (5), and the measured relative position is compared with a predefined position value, wherein
i) if the relative position measured lies within a predefined tolerance range, a gripping tool (4) of the robot (3) is moved towards the vehicle component (2) and is controlled to grip the vehicle component (2),
ii) if the relative position measured lies outside of the tolerance range, the robot (3) is moved relative to the container (1) depending on the relative position measured and step b) is started from the beginning,
iii) if the gripping tool (4) controlled to grip the vehicle component (2) fails to grip the vehicle component (2), the container (1) is sorted out.

2. The method according to claim 1,
wherein by use of a part presence sensor a presence of a rearmost vehicle component in a first row of the container allocated to a first initial path is analysed, and wherein if the presence of the rearmost vehicle component in the first row is detected, the robot (3) is moved along a first initial path relative to the container (1), elsewise the robot (3) is moved along a second initial path relative to the container (1).

3. The method according to claim 1 or 2,
wherein the success of the gripping of the vehicle component (2) by the gripping tool (4) is determined by use of at least one gripping control sensor (6).

4. The method according to one of the claims 1 to 3,
wherein by use of at least a identification sensor (7) the container (1) is uniquely identified and an information characterizing the sorting out of the identified container (1) is stored in a memory device together with the identification of the container (1).

5. The method according to claim 3,
wherein the container (1) is uniquely identified by capturing an identification number (9) placed on the container (1).

6. The method according to claim 4 or 5,
wherein the information characterizing the sorting out of the identified container (1) comprises the cause of the sorting out.

7. The method according to any one of the preceding claims,
wherein the robot (3) is slowed down from the initial velocity to a further velocity as soon as the relative position measured lies within the tolerance range and afterwards the gripping tool (4) of the robot (3) is moved towards the vehicle component (2) and is controlled to grip the vehicle component (2).

8. The method according to any one of the preceding claims,
wherein the robot (3) moves the gripping tool (4) to a predefined pick position, in which the gripping tool (4) is controlled to grip the vehicle component (2).

9. The method according to any one of the preceding claims,
wherein a sorting out of the container (1) does not take place when every vehicle component (2) being stored in the container (1) is removed from the container (1) by use of the gripping tool (4).

10. The method according to any one of the preceding claims,
wherein for the search sensor (5) a laser sensor or an ultrasonic sensor is used and/or for the identification sensor (7) a camera is used.

## Patentansprüche

1. Verfahren zum Testen eines Behälters (1), der in der Lage ist, mindestens eine Fahrzeugkomponente (2) aufzubewahren, wobei
a) ein Roboter (3) in einer vordefinierten Ausgangsstellung relativ zum Behälter (1) platziert und mit einer Anfangsgeschwindigkeit entlang eines Anfangsweges (12) relativ zum Behälter (1) bewegt wird, und
b) eine Relativposition zwischen einer im Behälter (1) aufbewahrten Fahrzeugkomponente (2) und dem Roboter (3) von mindestens einem Suchsensor (5) gemessen wird und die gemessene Relativposition mit einem vordefinierten Positionswert verglichen wird, wobei
i) wenn die gemessene Relativposition innerhalb eines vordefinierten Toleranzbereichs liegt, ein Greifwerkzeug (4) des Roboters (3) auf die Fahrzeugkomponente (2) zubewegt und zum Greifen der Fahrzeugkomponente (2) gesteuert wird,
ii) wenn die gemessene Relativposition außerhalb des Toleranzbereichs liegt, der Roboter (3) in Abhängigkeit von der gemessenen Relativposition relativ zum Behälter (1) bewegt und Schritt b) von vorne begonnen wird,
iii) wenn das Greifwerkzeug (4), das zum Greifen der Fahrzeugkomponente (2) gesteuert wird, die Fahrzeugkomponente (2) nicht greift, der Behälter (1) aussortiert wird.

2. Verfahren nach Anspruch 1,
wobei mittels eines Teileanwesenheitssensors das Vorhandensein einer hintersten Fahrzeugkomponente in einer ersten Reihe des Behälters, die einem ersten Anfangsweg zugeordnet ist, analysiert wird, und wobei, wenn das Vorhandensein der hintersten Fahrzeugkomponente in der ersten Reihe erkannt wird, der Roboter (3) entlang eines ersten Anfangsweges relativ zum Behälter (1) bewegt wird, andernfalls der Roboter (3) entlang eines zweiten Anfangsweges relativ zum Behälter (1) bewegt wird.

3. Verfahren nach Anspruch 1 oder 2,
wobei der Erfolg des Greifens der Fahrzeugkomponente (2) durch das Greifwerkzeug (4) unter Verwendung mindestens eines Greifkontrollsensors (6) bestimmt wird.

4. Verfahren nach einem der Ansprüche 1 bis 3,
wobei mittels mindestens eines Identifikationssensors (7) der Behälter (1) eindeutig identifiziert wird und die Aussortierung des identifizierten Behälters (1) charakterisierende Informationen zusammen mit der Identifikation des Behälters (1) in einer Speichervorrichtung gespeichert werden.

5. Verfahren nach Anspruch 3,
wobei der Behälter (1) durch Erfassen einer auf dem Behälter (1) angebrachten Identifikationsnummer (9) eindeutig identifiziert wird.

6. Verfahren nach Anspruch 4 oder 5,
wobei die Informationen, die das Aussortieren des identifizierten Behälters (1) charakterisieren, den Grund des Aussortierens umfassen.

7. Verfahren nach einem der vorhergehenden Ansprüche,
wobei der Roboter (3) von der Anfangsgeschwindigkeit auf eine weitere Geschwindigkeit abgebremst wird, sobald die gemessene Relativposition innerhalb des Toleranzbereichs liegt, und anschließend das Greifwerkzeug (4) des Roboters (3) auf die Fahrzeugkomponente (2) zubewegt und zum Greifen der Fahrzeugkomponente (2) gesteuert wird.

8. Verfahren nach einem der vorhergehenden Ansprüche, wobei der Roboter (3) das Greifwerkzeug (4) in eine vordefinierte Aufnahmeposition bewegt, in der das Greifwerkzeug (4) zum Greifen der Fahrzeugkomponente (2) gesteuert wird.

9. Verfahren nach einem der vorhergehenden Ansprüche, wobei ein Aussortieren des Behälters (1) nicht stattfindet, wenn jede Fahrzeugkomponente (2), die im Behälter (1) aufbewahrt wird, durch Verwenden des Greifwerkzeugs (4) aus dem Behälter (1) entfernt wird.

10. Verfahren nach einem der vorhergehenden Ansprüche, wobei für den Suchsensor (5) ein Lasersensor oder ein Ultraschallsensor und/oder für den Identifikationssensor (7) eine Kamera verwendet wird.

## Revendications

1. Procédé pour réaliser des essais sur un conteneur (1) capable de stocker au moins un composant de véhicule (2), dans lequel
a) un robot (3) est placé à une position initiale prédéfinie relativement au conteneur (1) et déplacé relativement au conteneur (1), avec une vitesse initiale, le long d'un chemin initial (12), et
b) une position relative entre un composant de véhicule (2) stocké dans le conteneur (1) et le robot (3) est mesurée par au moins un capteur de recherche (5), et la position relative mesurée est comparée à une valeur de position prédéfinie, dans lequel
i) si la position relative mesurée se trouve au sein d'une plage de tolérance prédéfinie, un outil de préhension (4) du robot (3) est déplacé vers le composant de véhicule (2) et est commandé pour prendre le composant de véhicule (2),
ii) si la position relative mesurée se trouve en dehors de la plage de tolérance, le robot (3) est déplacé relativement au conteneur (1) en fonction de la position relative mesurée et l'étape b) est commencée depuis le début,
iii) si l'outil de préhension (4) commandé pour prendre le composant de véhicule (2) n'arrive pas à prendre le composant de véhicule (2), le conteneur (1) est arrangé.

2. Procédé selon la revendication 1,
dans lequel, en utilisant un capteur de présence de pièce, une présence d'un dernier composant de véhicule dans une première rangée du conteneur attribué à un premier chemin initial est analysée, et dans lequel, si la présence du dernier composant de véhicule dans la première rangée est détectée, le robot (3) est déplacé le long d'un premier chemin initial relativement au conteneur (1), autrement le robot (3) est déplacé le long d'un second chemin initial relativement au conteneur (1) .

3. Procédé selon la revendication 1 ou 2,
dans lequel le succès de la préhension du composant de véhicule (2) par l'outil de préhension (4) est déterminé en utilisant au moins un capteur de contrôle de préhension (6).

4. Procédé selon l'une des revendications 1 à 3,
dans lequel, en utilisant au moins un capteur d'identification (7), le conteneur (1) est identifié de façon unique et une information caractérisant l'arrangement du conteneur identifié (1) est stockée dans un dispositif de mémoire conjointement à l'identification du conteneur (1).

5. Procédé selon la revendication 3,
dans lequel le conteneur (1) est identifié de façon unique en capturant un numéro d'identification (9) placé sur le conteneur (1).

6. Procédé selon la revendication 4 ou 5,
dans lequel l'information caractérisant l'arrangement du conteneur identifié (1) comprend la cause de l'arrangement.

7. Procédé selon l'une quelconque des revendications précédentes,
dans lequel le robot (3) est ralenti depuis la vitesse initiale jusqu'à une vitesse supplémentaire dès que la position relative mesurée se trouve au sein de la plage de tolérance et, après cela, l'outil de préhension (4) du robot (3) est déplacé vers le composant de véhicule (2) et est commandé pour prendre le composant de véhicule (2).

8. Procédé selon l'une quelconque des revendications précédentes,
dans lequel le robot (3) déplace l'outil de préhension (4) jusqu'à une position de prise prédéfinie, dans lequel l'outil de préhension (4) est commandé pour prendre le composant de véhicule (2).

9. Procédé selon l'une quelconque des revendications précédentes,
dans lequel un arrangement du conteneur (1) n'a pas lieu lorsque chaque composant de véhicule (2) stocké dans le conteneur (1) est enlevé du conteneur (1) en utilisant l'outil de préhension (4).

10. Procédé selon l'une quelconque des revendications précédentes,
dans lequel, pour le capteur de recherche (5), un capteur laser ou un capteur ultrasonique est utilisé et/ou, pour le capteur d'identification (7), une caméra est utilisée.
